# EUROPEAN PATENT SPECIFICATION

(11) **EP 2 444 466 B1**
(45) Date of publication and mention of the grant of the patent: **08.10.2014**
(21) Application number: 10789397.6
(22) Date of filing: 08.06.2010
(51) Int. Cl.: C09J 7/04, B32B 27/12, B32B 27/30, C09J 133/00, B60R 13/08, E01F 8/00

(54) **ABNORMAL NOISE PREVENTING SHEET**
PLATTE ZUM VERHINDERN VON ANORMALEM RAUSCHEN
FEUILLET ARRÊTANT LES BRUITS ANORMAUX

(30) Priority: 16.06.2009 JP 2009143341
(43) Date of publication of application: 25.04.2012
(73) Proprietor: Nitto Denko Corporation, Ibaraki-shi, Osaka 567-8680 (JP); TOYOTA JIDOSHA KABUSHIKI KAISHA, Toyota-shi, Aichi-ken, 471-8571 (JP)
(72) Inventor: YAGURA, Kazuyuki, Ibaraki-shi Osaka 567-8680 (JP); MATSUMOTO, Mitsuo, Ibaraki-shi Osaka 567-8680 (JP); NAKAGAWA, Shuji, Toyota-shi Aichi 471-8571 (JP)
(74) Representative: Grünecker, Kinkeldey, Stockmair & Schwanhäusser
(86) International application number: PCT/JP2010/059659
(87) International publication number: WO 2010/147022

(56) References cited:
- JP-A- 8 076 768
- JP-A- 10 138 849
- JP-A- 2006 111 818
- JP-A- 2009 046 009
- JP-U- H0 253 950
- US-A- 4 851 283
- US-B1- 6 790 520

## Description

### TECHNICAL FIELD

The present invention relates to an abnormal noise preventing sheet that prevents or reduces the generation of abnormal noise caused by the vibration, distortion, of a manufactured product. The present application claims priority based on Japanese Patent Application No. 2009-143341 that was filed on 16 June 2009.

### BACKGROUND ART

In manufactured products such as vehicles, home appliances, office automation equipment, that have drive members and other moving parts, the components constituting said manufactured products can interact and produce abnormal noises such as rattles (chattering) and squeaks due to vibration, that accompanies the operation of said moving parts. Moreover, in automobiles and other vehicles, vibrations caused by the condition of the road surface during driving, and the distortion of the vehicle during acceleration, deceleration, and turning can cause abnormal noise generation. To prevent or reduce the generation of such abnormal noise, an abnormal noise preventing sheet can be placed between the members that generate the noise (i.e., between members that can interact due to vibration and distortion). One mode of such a noise preventing sheet is configured to have a pressure-sensitive adhesive (PSA) layer on one side of a substrate such that the sheet can be immobilized at a desired location by affixing said PSA layer to the member. A substrate having nonwoven fabric as the main constituent thereof can be preferably used from the standpoint of its excellent performance in absorbing (buffering) vibrations. Patent document 1 can be noted as a technical document relating to abnormal noise preventing sheets. Patent document 2 is a technical document concerning adhesive tape for use in bundling electric wires.

US 4,851,283 A discloses thermoformable laminates suitable for use as automobile hardliners, which have sound absorbing characteristics. The laminates comprise a layer of a non-woven fabric.

### PRIOR ART

### PATENT DOCUMENT

Patent Document 1: Japanese Utility Model Application Laid-open No. H2-53950
Patent Document 2: Japanese Patent Application Laid-open No. 2003-286455

### DISCLOSURE OF THE INVENTION

### PROBLEM TO BE SOLVED BY THE INVENTION

Recently, the demand has grown for a reduction in the amount of toluene released from a PSA sheet (toluene emission level) and the amount of total volatile organic compounds (TVOC) contained therein. Therefore, in various fields previously used PSA Sheets are being replaced by PSA Sheets that have a lower toluene emission level (hereinafter, also referred to as low VOC PSA sheets). In particular, the change to low VOC PSA sheets is most desirable in the case of sheets that are used in relatively small, enclosed spaces such as automobile interiors, and PSA Sheets that are used indoors, such as in home appliances and office automation equipment.

The changeover to low VOC PSA sheets has been slow, however, in the field of abnormal noise preventing sheets. One primary reason is a condition specific to abnormal noise preventing sheets. Specifically, high-level of adhesive performance (for example, excellent adhesiveness to rough surfaces, excellent adhesiveness to materials with low polarity such as polyolefins) is generally required for the PSA used in abnormal noise preventing sheets, and the use of a tackifier resin is effective for achieving such adhesive performance. Producing a low VOC PSA sheet with a PSA composition that contains a tackifier, however, has proven extremely difficult. The materials used for the interiors of vehicles (automobiles, etc.) often have rough surfaces, so in an abnormal noise preventing sheet used in vehicles, it is particularly important to achieve both low VOC and excellent adhesiveness to rough surfaces.

Furthermore, a PSA with an acrylic polymer as the base polymer (acrylic -based PSA) is preferred as the PSA for an abnormal noise preventing sheet because of its excellent durability (weather resistance, heat resistance, and aging resistance) and because it is unlikely to damage the adherend. Thus, an object of the present invention is to provide an abnormal noise preventing sheet using an acrylic-based PSA that provides both extremely low toluene emission level and high performance.

The above object is achieved by an abnormal noise preventing sheet according to appended claim 1.

### MEANS FOR SOLVING THE PROBLEM

The present invention provides an abnormal noise preventing sheet comprising a substrate comprising a nonwoven fabric and a PSA layer provided on one surface (first side) thereof. The PSA constituting the PSA layer comprises an acrylic polymer as the base polymer and a tackifier. In addition, the toluene emission level when this abnormal noise preventing sheet is heated at 80°C for 30 min is no greater than 20 µg per gram of PSA layer.

Furthermore, a resin coating is provided on the surface of the first side of the substrate between the nonwoven fabric and the PSA.

An abnormal noise preventing sheet with this configuration has a PSA layer on one side of the substrate, and therefore the PSA layer can be positioned by the simple operation of pressing the same onto a desired location. Even though the PSA constituting the PSA layer is a composition containing a tackifier, the toluene emission level is kept extremely low. In addition, because the PSA is a composition containing a tackifier, the abnormal noise preventing sheet can exhibit excellent adhesive performance (e.g., adhesiveness, especially adhesiveness to rough surfaces). For example, an abnormal noise preventing sheet with a 180° peel adhesion to nonwoven fabric of about 4 N/20 mm or more can be realized thereby. Therefore, even if, for example, an external force (pressure or shear ) is applied to the abnormal noise preventing sheet, the sheet is unlikely to peel off or be displaced, and long-term, stable noise prevention performance can be displayed thereby.

Preferably an acrylic polymer synthesized by emulsion polymerization is used as the acrylic polymer. Using a PSA with this acrylic polymer as the base polymer enables fabrication of an abnormal noise preventing sheet with even lower toluene emission level. Preferably the PSA is formed from a PSA composition prepared by mixing an aqueous emulsion of the acrylic polymer and an aqueous emulsion of a tackifier. An abnormal noise preventing sheet with an even lower toluene emission level can be fabricated using such an adhesive.

In one preferred mode of the abnormal noise preventing sheet disclosed herein, the surface of the nonwoven fabric lies exposed on the second side of the substrate (i.e., the back side of the abnormal noise preventing sheet). An abnormal noise preventing sheet with such a configuration has excellent abnormal noise prevention performance because sounds are unlikely to be generated by the rubbing of the opposite material on the back side of the abnormal noise preventing sheet (i.e., material coming in direct contact with the back side of the abnormal noise preventing sheet due to vibration and distortion of the manufactured product). In addition, an abnormal noise preventing sheet with this configuration is advantageous from the standpoint of vibration absorption. Preferably no bleeding of the PSA onto the back side of the substrate is detected after a stick-slip test has been conducted on the abnormal noise preventing sheet in accordance with VDA 230-206. With such an abnormal noise preventing sheet the external appearance and texture of the back side of the sheet can hold up satisfactorily for a long period of time. For example, preferably the abnormal noise level is 3 or less when measured on a Ziegler Stick-Slip Test System using a polypropylene sheet as the opposite material under all measurement conditions involving loads of 5 N, 10 N, and 40 N and sliding speeds of 1 mm/sec, 4 mm/sec, and 10 mm/sec (combinations of load and sliding speed).

In the abnormal noise preventing sheet disclosed herein, a resin coating is provided on the surface of the first side of the substrate (i.e., the side with the PSA layer). This configuration can effectively prevent the phenomenon ofPSA bleeding onto the back side of the abnormal noise preventing sheet.

Preferably a nonwoven fabric with a bulk density of about 0.1 g/cm³ to 0.5 g/cm³ can be used as the nonwoven fabric constituting the substrate. An abnormal noise preventing sheet with excellent abnormal noise prevention capability and suitable strength can be realized using a nonwoven fabric of this bulk density. Since the surface of the first side of the substrate has a resin coating, the abnormal noise preventing sheet has excellent abnormal noise prevention capability and to a great extent can prevent bleeding of the PSA onto the back side.

In one preferred mode of the abnormal noise preventing sheet disclosed herein, the PSA layer is configured as a double-sided PSA sheet having PSA provided on each side of a support. In an abnormal noise preventing sheet with a configuration wherein the PSA layer has a support, the migration of the PSA (e.g., penetration of the PSA into the interior of the nonwoven fabric constituting the substrate) can be prevented by the support. Therefore, the PSA in the PSA layer is unlikely to bleed onto the back side of the abnormal noise preventing sheet even if the thickness of the PSA layer is, for example, relatively large compared to the thickness of the nonwoven fabric constituting the substrate. The fact that the PSA layer can be increased in thickness in this manner is advantageous from the standpoint of adhesiveness to the adherend (particularly adhesiveness to a rough surface). Furthermore, the support in the PSA layer can increase the cohesiveness of the PSA layer. The effects of these kinds of improvements in adhesiveness and cohesiveness combine to provide even better prevention of peeling and displacement of the abnormal noise preventing sheet due to external force and the passage of time, and an abnormal noise preventing sheet that displays a stable abnormal noise prevention performance over a long period of time can be realized thereby.

Any of the abnormal noise preventing sheets disclosed herein can preferably be used for the prevention of abnormal noise generation in vehicles, household appliances and office automation equipment because they provide both the low VOC and high performance noted above. They are especially preferred as abnormal noise preventing sheets to be used by affixing the PSA layer to a site facing the interior space of a vehicle or a space connecting thereto.

### BRIEF DESCRIPTION OF THE DRAWINGS

FIG. 1 is a cross-sectional drawing schematically illustrating an exemplary configuration of the abnormal noise preventing sheet of the present invention;
FIG. 2 is a cross-sectional drawing schematically illustrating an another exemplary configuration of the abnormal noise preventing sheet of the present invention; and
FIG. 3 is a schematic illustrative drawing exemplifying the method of using the abnormal noise preventing sheet of the present invention.

### BEST MODE FOR CARRYING OUT THE INVENTION

Preferred examples of the present invention are described below. prior art in this technical field. The present invention can be carried out on the basis of the content disclosed in the present description and common technical knowledge in this field. In addition, parts and locations with the same use have been given the same symbol to simplify the explanation and avoid unnecessary repetition.

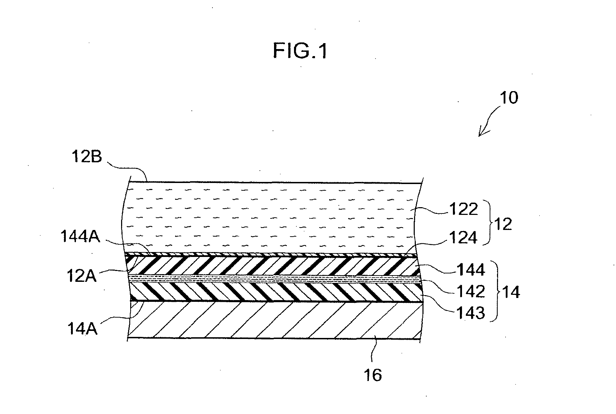

FIG. 1 schematically illustrates an example of a typical configuration the abnormal noise preventing sheet disclosed herein. This abnormal noise preventing sheet 10 has a sheet-shaped substrate 12 and a PSA layer 14 provided on one side 12A (the surface of the first side) of the substrate 12. The substrate 12 comprises a nonwoven fabric 122 (for example, felt) and a resin coating 124 that coats one side thereof. This resin coating 124 constitutes one side 12A of the substrate 12. The other side of the nonwoven fabric 122 is the exposed back side 12B of the substrate 12 (which can also be considered the back side of the abnormal noise preventing sheet 10 itself). In other words, the other side of the nonwoven fabric 122 constitutes the back side 12B of the substrate 12. The PSA layer 14 is configured as a double-sided PSA sheet having PSA 143, 144 on each side of a support 142 comprising a nonwoven fabric (for example, thin paper), and one PSA surface 144A of the double-sided PSA sheet 14 is integrated with the substrate 12 by being affixed to one side 12A of the substrate 12. This abnormal noise preventing sheet 10 is used by affixing the surface 14A of the PSA layer 14 (which corresponds to the other PSA surface of the double-sided PSA sheet 14, and can be considered the PSA surface of the abnormal noise preventing sheet 10 itself) to a member (adherend) that can cause abnormal noise generation. As shown in the drawing, in the abnormal noise preventing sheet 10 before it is used (i.e., before it is affixed to the adherend), the surface 14A of the PSA layer 14 is protected by a release liner 16 that has a releasing surface on at least the side of the PSA layer 14. It should be noted that in FIG. 1 the interfaces between the PSA 143, 144 and the support 142 are illustrated by a straight line for convenience in understanding the drawing, but in reality the bottom of the PSA 143, 144 (on the support side) penetrates into the support 142.

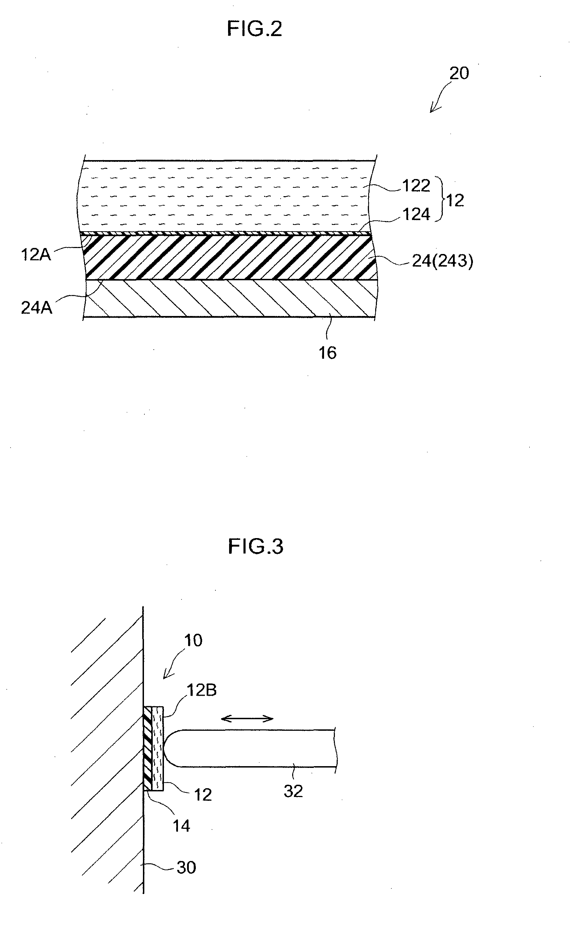

FIG. 2 schematically illustrates an example of another configuration the abnormal noise preventing sheet disclosed herein. This abnormal noise preventing sheet 20 provides a substrate 12 similar to that in the abnormal noise preventing sheet 10 shown in FIG. 1 and a PSA layer 24 on one side 12A of the substrate 12. This PSA layer 24 differs from the PSA layer 14 of the abnormal noise preventing sheet 10 shown in FIG. 1 in that it contains no support. In other words, the PSA layer 24 consists entirely of PSA 243 (a viscoelastic substance). Just as in the case of the abnormal noise preventing sheet 10 shown in FIG. 1, in the abnormal noise preventing sheet 20 before it is used, the surface 24A of the PSA layer 24 is protected by a release liner 16 that has a releasing surface on at least the side of the PSA layer 24.

The abnormal noise preventing sheet of the present invention is characterized by a toluene emission level when the sheet is heated to 80°C for 30 min (hereinafter, simply referred to as "toluene emission level") of 20 µg per 1 g of PSA layer (hereinafter, also expressed as "20 µg/g" .) In one preferred mode the toluene emission level is 10 µg or less. The lower limit of the toluene emission level is not particularly limited herein, but in consideration of adhesiveness and production efficiency, normally it is 0.5 µg/g or more, and typically 1 µg/g or more. It should be noted that the value obtained by the toluene emission measurement method described below is used for the toluene emission level.

### [Toluene emission measurement method]

A test sample containing a PSA layer of a specified size (for example, an area of 5 cm²) is placed in a vial, and the vial is sealed. The vial is heated at 80°C for 30 min, and 1.0 mL of heated gas therefrom is injected into a gas chromatography apparatus (GC apparatus) equipped with a headspace autosampler to measure the toluene emission. The amount of toluene generated per 1 g of PSA contained in the sample (toluene emission level) [µg/g] is calculated from the measurement results.

For the abnormal noise preventing sheet featuring a PSA layer mode having PSA on each side of a support as illustrated in FIG. 1, for example, it should be noted that the mass of the PSA layer serving as the basis for calculating the toluene emission per 1 g of PSA layer is the mass of the entire PSA layer that comprises both the PSA and the support. Furthermore, a PSA layer prior to integration with the substrate (for example, PSA layer in the mode of a double-sided PSA sheet) cut to the specified size can be used as the above sample, and a PSA layer taken from an abnormal noise preventing sheet can also be used. On the other hand, if the toluene emission from a constituent element other than the PSA layer is negligible (for example, if at least 95% by mass of the toluene emitted from the abnormal noise preventing sheet originates in the PSA layer), the toluene emission from the PSA layer can be measured by using a sample of the specified size cut from an abnormal noise preventing sheet.

In one preferred mode of the abnormal noise preventing sheet disclosed herein, the amount of TVOC when the sheet is heated to 80°C for 30 min, (hereinafter, simply referred to as "TVOC level") is about 150 µg or less per 1 g of PSA layer. More preferably, the TVOC level is about 120 µg/g or less. The lower limit of the TVOC level is not particularly limited herein, but in consideration of PSA properties and production efficiency, normally it is 5 µg/g or more and typically 10 µg/g or more. It should be noted that the value obtained by the TVOC measurement method described below is used as the amount of TVOC.

### [TVOC measurement method]

A vial containing the same kind of sample as that used in the toluene emission measurement method is heated to 80°C for 30 min, and 1.0 mL of heated gas therefrom is injected into a GC apparatus equipped with a headspace autosampler. On the basis of the resulting gas chromatogram, the TVOC level [µg/g]per 1 g of PSA layer contained in the test sample is determined by assigning and quantitating the peaks using standard substances for the predicted volatiles based on the material used in the manufacture of the PSA layer (monomers used in the synthesis of the acrylic polymer, solvent used in the manufacture of the tackifier emulsion described below), and by quantitating the other (unassignable) peaks by mathematical conversion to toluene equivalents.

It should be noted that just as in the case of toluene emission measurements, in an abnormal noise preventing sheet featuring a PSA layer mode comprising PSA on both sides of the support, the mass of the PSA layer serving as the basis for calculating the TVOC level per 1 g of PSA layer is the mass of the entire PSA layer comprising both the PSA and the support. Furthermore, a PSA layer prior to integration with the substrate cut to the specified size can be used as the above sample, and a PSA layer taken from an abnormal noise preventing sheet can also be used. Alternatively, if the amount of TVOC derived from a constituent element other than the PSA layer is negligible (for example, if at least 95% by mass of the TVOC emitted from the abnormal noise preventing sheet originates in the PSA layer) the TVOC level of the PSA layer can be measured using a sample of the specified size cut from the abnormal noise preventing sheet.

The gas chromatography measurement conditions for both the toluene emission measurement method and TVOC measurement method are as follows.
- Column: DB-FFAP 1.0 µm (0.535 mm 0 × 30 m)
- Carrier gas: He 5.0 mL/min
- Column head pressure: 23 kPA (40°C)
- Injection port: split (split ratio 12:1, temperature 250°C)
- Column temperature: 40°C (0 min)-<+10°C/min>-250°C (9 min) [meaning the temperature was raised from 40°C to 250°C at a rate of 10°C/min and then maintained at 250°C for 9 min.]
- Detector: FID (temperature 250°C)

In the technology disclosed herein the PSA constituting the PSA layer comprises an acrylic polymer and a tackifier. The PSA typically is formed from a PSA composition in a liquid state (solution or emulsion .) containing an acrylic polymer, tackifier, and suitable medium. For example, the PSA can be obtained by drying or curing such a PSA composition.

The acrylic polymer serves as the PSA base polymer (primary component among the polymer components, i.e., the component accounting for 50% or more by mass), and is a polymer obtained by polymerization (for example, emulsion polymerization) of the specific monomer starting material. The monomer starting material typically has an alkyl (meth)acrylate, i.e., the (meth)acrylic acid ester of an alkyl alcohol, as the primary monomer (main constituent monomer). Here the term "(meth)acrylic acid" is a concept encompassing both acrylic acid and methacrylic acid. Furthermore, the term "alkyl (meth)acrylate as the primary monomer" means that ratio of the alkyl (meth)acrylate content (or if two or more types of alkyl (meth)acrylate are contained, the total content thereof) to the total amount of monomer starting material exceeds 50% by mass. The content ratio of this alkyl (meth)acrylate can, for example, lie in the range between more than 50% by mass and 99.8% by mass of the monomer starting material. Preferably the alkyl (meth)acrylate content ratio of the monomer starting material is about 80% by mass or more (typically, about 80% by mass to 99.8% by mass), and more preferably is about 85% by mass or more (typically about 85% by mass to 99.5% by mass). The alkyl (meth)acrylate ratio in the monomer starting material can also be about 90% by mass or more (typically about 90% by mass to 99% by mass). This ratio roughly corresponds to the (co)polymerization rate of the alkyl (meth)acrylate in the acrylic polymer obtained by polymerization of the monomer starting material.

The alkyl (meth)acrylate can be one or more types selected from compounds represented by formula (1) below.

CH₂=C(R¹)COOR² (1)

In this case, R¹ in formula (1) is a hydrogen atom or methyl group. Moreover, R² in formula (1) is an alkyl group with 1 to 20 carbon atoms. Specific examples of R² include: methyl, ethyl, n-propyl, isopropyl, n-butyl, isobutyl, s-butyl, t-butyl, pentyl, isoamyl, neopentyl, hexyl, heptyl, octyl, isooctyl, 2-ethylhexyl, nonyl, isononyl, decyl, isodecyl, undecyl, dodecyl, tridecyl, tetradecyl, pentadecyl, hexadecyl, heptadecyl, octadecyl, nonadecyl, and eicosyl groups. Preferably, the alkyl group with 2 to 14 carbon atoms (hereinafter, this kind of range of carbon atoms is also expressed as "C₂₋₁₄"), and more preferably is a C₂₋₁₀ alkyl group (for example, a butyl group or 2-ethylhexyl group ).

In one preferred mode, about 80% by mass or more (more preferably about 90% by mass or more) of the total amount of alkyl (meth)acrylate contained in the monomer starting material is the (meth)acrylic acid ester of an alkyl alcohol wherein R² in formula (1) is C₂₋₁₀ (more preferably, C₄₋₈). Essentially, the entire amount of alkyl (meth)acrylate contained in the monomer starting material can be a C₂₋₁₀ alkyl (or more preferably, a C₄₋₈ alkyl) (meth)acrylate. One type of alkyl (meth)acrylate can be used alone, or two or more types can be combined and used together. For example, the monomer starting material can be a formulation containing, as the alkyl (meth)acrylate, butyl acrylate alone , 2-ethylhexyl acrylate alone, or both butyl acrylate and 2-ethylhexyl acrylate in a desired ratio.

In addition to the alkyl (meth)acrylate as the main monomer, the monomer starting material can also contain other monomer (copolymer component) as an optional component. The "other monomer" can be one or more types selected from a group consisting of various types of monomers that are copolymerizable with the alkyl (meth)acrylate used herein. This copolymer component can be used for a purpose such as introducing a crosslinking point into the acrylate polymer, increasing the cohesive strength of the acrylate polymer. It is noted that preferably the ratio of alkyl (meth)acrylate to the total amount of monomer components constituting the acrylic polymer is about 80% by mass or more (for example, about 80% by mass to 99.8% by mass), more preferably, about 85% by mass or more (for example, about 85% by mass to 99.5% by mass), and even more preferably about 90% by mass or more (for example, about 90% by mass to 99% by mass).

More specifically, a monomer containing a functional group can be used as the copolymer component to introduce a crosslinking point to the acrylate polymer (especially a monomer containing a thermal crosslinking functional group to introduce a crosslinking point for thermal crosslinking of the acrylate polymer). The adhesiveness with respect to the adherend can be increased by using such a functional group-containing monomer. The functional group-containing monomer is not particularly limited herein provided it can copolymerize with the alkyl (meth)acrylate and is a monomer having a functional group that can serve as a crosslinking point (typically, an ethylenically unsaturated monomer). Examples include: carboxyl group-containing monomers such as (meth)acrylic acid, itaconic acid, crotonic acid, maleic acid, fumaric acid, isocrotonic acid, or the anhydrides thereof such as maleic anhydride or itaconic anhydride; an unsaturated acid other than a carboxylic acid such as 2-(meth)acrylamide-2-methyl propane sulfonic acid or 2-(meth)acryloyl oxy ethyl phosphate; hydroxyl group-containing monomers such as 2-hydroxyethyl (meth)acrylate, 2-hydroxypropyl (meth)acrylate, 2-hydroxybutyl (meth)acrylate, 6-hydroxyhexyl (meth)acrylate and other hydroxy (meth)acrylates, as well as vinyl alcohols and allyl alcohols; amide group-containing monomers such as (meth)acrylamide, N,N-dimethyl (meth)acrylamide, N-butyl (meth)acrylamide, N-methylol (meth)acrylamide, N-methylol propane (meth)acrylamide, N-methoxymethyl (meth)acrylamide or N-butyoxymethyl (meth)acrylamide; amino group-containing monomers such as aminoethyl (meth)acrylate, N,N-dimethylaminoethyl (meth)acrylate or t-butyl aminoethyl (meth)acrylate; epoxy group-containing monomers such as glycidyl (meth) acrylate or methylglycidyl (meth)acrylate; cyano-containing monomers such as acrylonitrile or methacrylonitrile; monomers with heterocyclic rings (e.g., rings containing a nitrogen atom) such as N-vinyl-2-pyrrolidone, N-methyl vinyl pyrrolidone, N-vinyl pyridine, N-vinyl piperidone, N-vinyl pyrimidine, N-vinyl piperazine, N-vinyl pyrazine, N-vinyl pyrrole, N-vinyl imidazole, N-vinyl oxazole, N-vinyl morpholine, N-vinyl caprolactam or N-(meth)acryloyl morpholine; and monomers containing an alkoxysilyl group such as 3-(meth)acryloxy propyl trimethoxysilane, 3-(meth)acryloxy propyl triethoxysilane, 3-acryloxypropyl triethoxysilane, 3-(meth)acryloxypropyl methyl dimethoxysilane or 3-(meth)acryloxypropyl methyl diethoxy silane.

One type of such a functional group-containing monomer can be used alone, or two or more types can be combined and used together. Examples of preferably used functional group-containing monomers include a carboxyl group-containing monomer or anhydride thereof (more preferably an ethylenically unsaturated monocarboxylic acid). Among these the use of acrylic acid and/or methacrylic acid is preferred. Other example of a preferably used functional group-containing monomer is a monomer having an alkoxysilyl group. In a formulation of monomer starting material comprising such a functional group-containing monomer, the content ratio of the functional group-containing monomer (or when two or more types are contained, the total content thereof) can be set, for example, at about 12 parts by mass or less (typically, about 0.5 parts by mass to 12 parts by mass) in relation to 100 parts by mass of the alkyl (meth)acrylate. Such a ratio can be about 8 parts by mass or less in relation to 100 parts by mass of the alkyl (meth)acrylate (typically about 1 part by mass to 8 parts by mass).

Moreover, a copolymer component other than the above functional group-containing monomer can be used to increase the cohesive strength of the acrylate polymer. Examples of such a copolymer component include a vinyl ester monomer such as vinyl acetate or vinyl propionate; a styrene-based monomer such as styrene, substituted styrene (α-methyl styrene) or vinyl toluene; a (meth)acrylate containing a non-aromatic ring such as cyclohexyl (meth)acrylate, cyclopentyl di(meth)acrylate, or another (meth)acrylic acid cycloalkyl ester or isobornyl (meth)acrylate; a (meth)acrylate containing an aromatic ring such as phenyl (meth)acrylate or another aryl (meth)acrylate, phenoxyethyl (meth)acrylate or another aryloxy alkyl (meth)acrylate, and benzyl (meth)acrylate or another arylalkyl (meth)acrylate); an olefin-based monomer such as ethylene, propylene, isoprene, butadiene or isobutylene; vinyl chloride or vinylidene chloride; a monomer containing an isocyanate group such as 2-(meth)acryloyl oxy ethylene isocyanate; an alkoxy-group containing monomer such as methoxyethyl (meth)acrylate or ethoxyethyl (meth)acrylate; and a polyfunctional monomer such as methyl vinyl ether, ethyl vinyl ether, or another vinyl ether-based monomer, and 1,6-hexadiol di(meth)acrylate, ethylene glycol di(meth)acrylate, diethylene glycol di(meth)acrylate, triethylene glycol di(meth)acrylate, tetraethylene glycol di(meth)acrylate, (poly)ethylene glycol di(meth)acrylate, propylene glycol di(meth)acrylate, (poly)propylene glycol di(meth)acrylate, neopentyl glycol di(meth)acrylate, pentaerythritol di(meth)acrylate, trimethylol propane tri(meth)acrylate, pentaerythritol tri(meth)acrylate, dipentaerythritol hexa(meth)acrylate, glycerin di(meth)acrylate, epoxy acrylate, polyester acrylate, urethane acrylate, divinylbenzene, butyl di(meth)acrylate or hexyl di(meth)acrylate.

One type of such a copolymer component can be used alone, or two or more types can be combined and used together. In a formulation of monomer starting material comprising such a copolymer component, the content ratio of the copolymer component (or when two or more types are contained, the total content thereof) can be set, for example, at about 12 parts by mass or less (typically, about 0.5 parts by mass to 12 parts by mass) in relation to 100 parts by mass of the alkyl (meth)acrylate. Such a ratio can be about 8 parts by mass or less in relation to 100 parts by mass of the alkyl (meth)acrylate (typically about 1 part by mass to 8 parts by mass). A copolymer formulation of acrylate polymer that contains substantially no such copolymer component can also be used.

The polymerization method for obtaining the acrylic polymer from a monomer starting material comprising such a formulation is not particularly limited herein, and various polymerization methods that are publicly known from prior art can be suitably used. For example, a polymerization method carried out using a thermal polymerization initiator (thermal polymerization methods such as solution polymerization, emulsion polymerization or bulk polymerization) or a polymerization method carried out using irradiation with an active energy ray (also called a high energy ray) such as light or radiation can be used. Among these, emulsion polymerization using water as the polymerization medium can be noted as the polymerization method that is especially preferred for the present invention.

In one preferred mode of the technology disclosed herein, the acrylic polymer is synthesized by emulsion polymerization of the monomer starting material. The mode of emulsion polymerization is not particularly limited herein, and just as in the case of prior art, publicly known general forms of emulsion polymerization, for example, publicly known means can be used for supplying the various monomers, for establishing the polymerization conditions (polymerization temperature, polymerization time and polymerization pressure) and for determining the materials to be used (polymerization initiator or surfactant). For example, bulk charging method wherein all monomer starting material are supplied to the polymerization vessel at one time, the continuous supply (drip) method, or the split supply (drip) method, etc., can all be used as the method for supplying the monomers. Part or all of the monomer starting material can be mixed with water and emulsified beforehand, and that emulsified liquid (i.e., emulsion of monomer starting material) can then be supplied to the reaction vessel. The polymerization temperature can be suitably selected in accordance with the type of monomers used and the type of polymerization initiator. For example, the temperature can be selected from the temperature at not greater than 100°C but higher than ambient temperature (typically 40°C to 100°C, e.g., 40°C to 80°C).

Examples of the surfactant (emulsifier) that can be used include: anionic emulsifiers such as sodium lauryl sulfate, ammonium lauryl sulfate, sodium dodecyl benzene sulfonate, polyoxyethylene alkyl ether sodium sulfates, ammonium polyoxyethylene alkyl phenyl ether sulfates, and sodium polyoxyethylene alkyl phenyl ether sulfates; and nonionic emulsifiers such as polyoxyethylene alkyl ethers and polyoxyethylene alkyl phenyl ethers. A radical-polymerizable emulsifier (reactive emulsifier) having a structure wherein a radical polymerizable group (for example, a propenyl group) has been introduced can be used as such an anionic or nonionic surfactant. One type of such an emulsifier can be used alone, or two or more types can be combined and used together. The amount of emulsifier used (on a solid content basis) can be set, for example, to about 0.2 parts by mass to 10 parts by mass (preferably about 0.5 parts by mass to 5 parts by mass) in relation to 100 parts by mass of monomer starting material.

The polymerization initiator used during polymerization can be suitably selected from publicly known and conventional polymerization initiators in accordance with the type and mode of polymerization method (polymerization conditions). Examples of the polymerization initiator include azo-based polymerization initiators such as 2,2'-azobis isobutyronitrile, 2,2'-azobis (2-methyl propionamidine) disulfate, 2,2'azobis [N-(2-carboxyethyl)-2-methyl propionamidine] hydrate, 2,2'-azobis (2-amidinopropane) dihydrochloride, 2,2'-azobis [2-(5-methyl-2-imidazolin-2-yl) propane] dihydrochloride, 2,2'-azobis (N,N'-dimethylene isobutyl amidine), 2,2'-azobis (4-methoxy-2,4-dimethyl valeronitrile), 2,2'-azobis (2,4-dimethyl valeronitrile), 2,2'-azobis (2-methyl butyronitrile), 1,1'-azobis (cyclohexane-1-carbonitrile), 2,2'-azobis (2,4,4,-trimethyl pentane), and dimethyl-2,2'-azobis (2-methyl propionate); persulfates such as potassium persulfate, and ammonium persulfate; peroxide polymerization initiators such as benzoyl peroxide, t-butyl hydroperoxide, di-t-butyl peroxide, t-butyl peroxibenzoate, dicumyl peroxide, 1,1-bis (t-butylperoxy)-3,3,5-trimethyl cyclohexane, 1,1-bis (t-butylperoxy) cyclododecane, and hydrogen peroxide; substituted ethane-based polymerization initiators such as phenyl-substituted ethane; aromatic carbonyl compounds; and redox-based initiators that combine a peroxide and a reducing agent. One type of polymerization initiator can be used alone, or two or more types can be combined and used together.

The amount of polymerization initiator to be used can be roughly the amount that is normally used, and for example, can be selected from a range of about 0.005 parts by mass to 1 part by mass in relation to 100 parts by mass of the monomer starting material.

During polymerization a chain transfer agent (which can be considered a molecular weight regulator or degree of polymerization regulator) can be used as needed. A publicly known and conventional chain transfer agent can be used for the chain transfer agent herein, and examples include mercaptans such as dodecyl mercaptan (dodecane thiol), lauryl mercaptan, glycidyl mercaptan, 2-mercaptoethanol, mercaptoacetic acid, 2-ethylhexyl thioglycolic acid, and 2,3-dimercapto-1-propanol; as well as an α-methyl styrene dimer. One type of such a chain transfer agent can be alone, or two or more types can be combined and used together. The amount of chain transfer agent to be used can be roughly the amount that is normally used, and for example, can be selected from a range of about 0.001 parts by mass to 0.5 parts by mass in relation to 100 parts by mass of monomer starting material.

In one preferred mode wherein the monomer starting material undergoes emulsion polymerization according to the technology disclosed herein, the monomer starting material is supplied to a reaction vessel containing the polymerization initiator, and the system is maintained at a polymerization temperature higher than ambient temperature (preferably about 40°C to 80°C, e.g., about 50°C to 70°C) to carry out the polymerization reaction on the monomer starting material. Thereafter, the contents of the reaction vessel (reaction solution) will typically be cooled to ambient temperature. For example, the entire amount of monomer starting material can be supplied at the same time to a reaction vessel charged with the entire amount of polymerization initiator, the entire amount of monomer starting material can be supplied continuously over a specified period of time (continuous supply), or the entire amount of monomer starting material can be divided into several portions and supplied at specified time intervals (e.g., about 5 min to 60 min) (split supply). When the monomer starting material is supplied continuously, normally the suitable time period is set to about 1 to 8 hours, preferably about 2 hours to 6 hours (e.g., about 3 hours to 5 hours). Moreover, when the monomer starting material is divided and supplied, normally a suitable time period from the initial supply of the monomer starting material fraction until the final supply of the monomer material fraction is set to about 1 hour to 8 hours, preferably about 2 hours to 6 hours (e.g., about 3 hours to 5 hours). Alternatively, at least part of the monomer starting material can be supplied to a reaction vessel charged with part of the polymerization initiator to initiate polymerization of the monomer starting material, and the remainder of the polymerization initiator can be supplied continuously over a specified time or divided into several portions and supplied at specified time intervals. Normally, it is preferable to finish supplying the polymerization initiator at about the same time or before completing the supply of the monomer starting material.

The polymerization time (which can be referred to as the time required to carry out the polymerization of the monomer starting material and considered as the time for the system to be kept at the polymerization temperature starting at the beginning of the polymerization reaction) can be suitably selected according to the type of polymerization initiator to be used, the polymerization temperature, the method of supplying the polymerization initiator and the monomer starting material. For example, the polymerization time can be about 2 hours to 12 hours, but from the standpoint of productivity, normally a time of about 4 hours to 8 hours is preferred. Preferably the contents of the reaction vessel (reaction mixture) are kept at the polymerization temperature for a predetermined time after supplying of the monomer starting material has been completed (for so-called aging). This aging process can lower the amount of the monomers remaining in the liquid reaction mixture, enabling an acrylic polymer capable of forming a PSA layer with an even lower TVOC level to be obtained. For example, the aging time can be about 30 min to 4 hours, but from the standpoint of productivity, normally a time of about 1 hour to 3 hours is preferred. It should be noted that the polymerization time referred to herein includes the aging time. For example, when all of the monomer starting material is supplied continuously over 4 hours to a reaction vessel containing all of the polymerization initiator, the reaction vessel is kept at the polymerization temperature after the monomer starting material has been supplied for 2 hours to age the reaction mixture, so the polymerization time is considered to be 6 hours. The polymerization temperature can be constant over the entire polymerization time or can differ in different time intervals. For instance, after the monomer starting material is supplied at a prescribed polymerization temperature, the aging process can be carried out at a higher temperature.

In one preferred mode wherein the monomer starting material is emulsion polymerized by the technology disclosed herein, after the monomer starting material has been supplied to the reaction vessel, a time interval can be inserted, and then additional polymerization initiator can be supplied to the contents of the reaction vessel (reaction mixture). By supplying this kind of supplemental polymerization initiator (hereinafter, also called "supplemental initiator"), the amount of monomer remaining in the liquid reaction mixture can be decreased efficiently (typically, by promoting the polymerization of residual monomer). As a result, an acrylic polymer capable of forming a PSA layer with an even lower TVOC level can be obtained. The supplemental initiator can be the same initiator previously used for the polymerization of the monomer starting material (i.e., the polymerization initiator supplied to the reaction vessel before all of the monomer starting material was supplied; hereinafter sometimes referred to as "primary initiator") or it can be a different initiator. A polymerization initiator (which can be selected, for example, from azo-based, persulfate-based, or peroxide-based polymerization initiators) that has a half-life temperature lower than that of the primary initiator (which can be selected, for example, from azo-based, persulfate-based, or peroxide-based polymerization initiators) can be preferably used as the supplemental initiator, which enables the amount of residual monomer to be reduced effectively. A redox polymerization initiator can also be preferably used as the supplemental initiator. Examples of a preferably used redox polymerization initiator include: a combination of a peroxide (hydrogen peroxide) and ascorbic acid; a combination of a peroxide (hydrogen peroxide) and an iron(II) salt; or a combination of a persulfate salt (ammonium persulfate) and sodium bisulfite. Among these, preferably a combination of hydrogen peroxide and ascorbic acid (typically in a form of 1% to 35% aqueous hydrogen peroxide) is used because no undesirable by-products are formed after the redox reaction. The amount of the supplemental initiator to be used is not particularly limited herein and can be selected, for example, from a range of about 0.005 parts by mass to 1 part by mass in relation to 100 parts by mass of the monomer starting material.

The preferred time for supplying (adding) this supplemental initiator can differ depending on the type of supplemental initiator. Preferably, addition is carried out by inserting a time interval after the monomer starting material has been supplied to the reaction vessel (typically, after about 10 min to 4 hours, e.g., about after 1 hour to 3 hours have elapsed) but before the reaction liquid has finished cooling. For example, with a type of supplemental initiator that reduces the residual monomer by dissociating with heat and generating free radicals (an azo-based polymerization initiator, persulfate salt or peroxide-based polymerization initiator), the supplemental initiator is preferably added during the aging period mentioned above (for example, at a point when about 30% to 95% of the aging period has elapsed). Moreover, if a redox-based supplemental initiator is used, preferably a mode will be used wherein the supplemental initiator is added close to the end of the aging period (for example, a mode wherein the addition of the supplemental initiator is almost concurrent with the start of cooling) or during the cooling of the reaction liquid. Accordingly, this can control adverse effects on productivity and efficiently reduce the amount of residual monomer. The addition of the supplemental initiator can be carried out all at once, continuously, or divided into portions. Preferably the mode of adding the supplemental initiator all at once can be used because of the simplicity of the operation.

It should be noted that in emulsion polymerization the amount of residual monomer can be efficiently reduced by the use of the supplemental initiator, and therefore even if the polymerization time is extremely long (for example, even if the polymerization time is about 8 hours or less) an acrylic polymer emulsion can be obtained in which the amount residual monomer is sufficiently reduced. A PSA composition prepared by blending a tackifier into this kind of acrylic polymer emulsion enables a PSA layer to be formed wherein the toluene emission and TVOC levels are greatly reduced. Realizing a low VOC PSA without requiring this kind of extremely long polymerization time is preferable from the standpoint of increasing the productivity of producing the PSA composition and the abnormal noise preventing sheet manufactured using the same.

Preferably the PSA composition can be prepared by blending the tackifier into the acrylic polymer obtained by the mode of emulsion polymerization noted above. One or more types selected from various tackifiers such as rosin-based resins, rosin derivative resins, petroleum resins, terpene-based resins, phenol-based resins, or ketone-based resins can be used as the tackifier. Examples of the rosin-based resin include gum rosin, wood rosin, and toll oil rosin, and stabilized rosin (for example, stabilized rosins wherein the above rosins are treated by disproportionation or hydrogenation), polymer rosins (for example, a multimer of the above rosin, typically a dimer) and modified rosins (for example, an unsaturated acid-modified rosin obtained by modification with an unsaturated acid such as maleic acid, fumaric acid or (meth)acrylic acid). Examples of the rosin-derivative resins include the esterified form, phenol-modified form, and the esterified form of the phenol-modified form of the above rosin-based resins. Examples of the petroleum resins include aliphatic petroleum resins, aromatic petroleum resins, copolymer petroleum resins, alicyclic petroleum resins, and the hydrogenated forms thereof. Examples of the terpene-based resins include α-pinene resins, β-pinene resins, aromatic modified terpene resins, and terpene-phenol resins. Examples of the above ketone resins include resins obtained by the condensation of a ketone (for example, an aliphatic ketone such as methyl ethyl ketone, methyl isobutyl ketone or acetophenone; or an alicyclic ketone such as cyclohexanone, or methyl cyclohexanone) with formaldehyde.

Preferably a tackifier with a softening point (softening temperature) of about 100°C or higher (typically about 110°C or higher, preferably about 120°C or higher, and even more preferably about 140°C or higher) is used in the technology disclosed herein. An abnormal noise preventing sheet with even higher performance (wherein, for example, at least one of either adhesiveness or heat resistance is improved) can be realized by using a tackifier with such a softening point. The upper limit of the softening point of the tackifier is not particularly limited herein, and can, for example, be about 170°C or less (preferably about 160°C or less, more preferably about 155°C or less).

Preferably this tackifier can be used in the form of an aqueous emulsion (tackifier emulsion) obtained by dispersing the resin in water. For example, by mixing an aqueous emulsion of acrylic polymer with an aqueous emulsion of the tackifier, a PSA composition containing these components at a desired ratio can be obtained. Preferably a tackifier emulsion at least containing no substantial amount of aromatic hydrocarbon solvent (or more preferably, containing no substantial amount of aromatic hydrocarbon solvent and other organic solvent) is used therefor. A PSA Sheet with an even lower toluene emission level can be provided thereby.

Examples of the tackifier emulsion that can be preferably used in the technology disclosed herein include product name "SK-253NS" (Harima Chemicals, Inc.; softening point 145°C; a tackifier-containing emulsion produced using substantially no organic solvents), and product name "Tamanor E-200-NT" (Arakawa Chemical Industries, Ltd.; softening point 150°C; a tackifier-containing emulsion produced using an alicyclic hydrocarbon-based organic solvent).

One type of tackifier can be used alone, or two or more types can be combined and used together. For example, a tackifier with a high softening point (for example, about 130°C or higher) and a tackifier with a lower softening point (for example, a softening point of about 80°C to 120°C) can be combined at a suitable ratio and used together. Accordingly, the low temperature properties (adhesiveness and tackiness under low temperature conditions) can be increased while limiting a decline in other properties. From the standpoint of cohesiveness, in a high temperature environment, about 50% or more of the total mass of tackifier used is preferably a high softening point tackifier

The amount of tackifier blended into the acrylic polymer is not particularly limited in the technology disclosed herein, and can be suitably established in accordance with the intended adhesive performance (adhesiveness to rough surfaces, adhesiveness toward polyolefin and low-polarity materials). The tackifier (on a solid content basis) can be used at a ratio of about 10 parts by mass to 100 parts by mass (preferably about 15 parts by mass to 80 parts by mass, more preferably about 20 parts by mass to 60 parts by mass, e.g., about 20 parts by mass to 40 parts by mass) in relation to 100 parts by mass of the acrylic polymer. If the amount of tackifier used is too small, the effect of increased adhesiveness from the addition of the tackifier (for example, adhesiveness to a difficult adherend such as a rough surface or member made of polyolefin) is unlikely to be adequately exhibited. Moreover, if the amount of tackifier used is too great, compatibility with the acrylic polymer tends to be insufficient, and the low-temperature properties tend to decline. Moreover, it is desirable to avoid the excessive use of tackifier to reduce the toluene emission and TVOC levels in the PSA layer (and in the abnormal noise preventing sheet).

The above PSA composition can include a crosslinking agent as needed. The type of crosslinking agent is not particularly limited herein, and can be suitably selected from publicly known and conventional crosslinking agents (for example, isocyanate-based, epoxy-based, oxazoline-based, aziridine-based, melamine-based, peroxide-based, urea-based, metal alkoxide-based, metal chelete-based, metal salt-based, carbodiimide-based, and amine-based crosslinking agents). The crosslinking agent can be either oil-soluble or water-soluble. One type of crosslinking agent can be used alone, or two or more types can be combined and used together. The amount of crosslinking agent to be used is not particularly limited herein, and for example, can be selected from a range of about 20 parts by mass or less (for example, about 0.005 parts by mass to 20 parts by mass, preferably about 0.01 parts by mass to 10 parts by mass) in relation to 100 parts by mass of acrylic polymer. It should be noted that either in place of or in addition to using such a crosslinking agent, the PSA can be crosslinked by irradiation with an active energy ray such as an electron beam or UV beam.

The PSA composition may contain an acid or a base (ammonia water) for adjusting the pH, etc., as needed. Examples of other optional components that can be contained in the composition include various additives commonly used in the field of aqueous PSA compositions, such as a viscosity regulator (thickener), leveling agent, release control agent, plasticizer, softener, filler, colorant such as a pigment or dye, surfactant, antistatic agent, preservative, anti-aging agent, UV absorber, antioxidant and photo-stabilizer.

Typically the nonwoven fabric constituting the substrate of the abnormal noise preventing sheet disclosed herein (nonwoven fabric for the substrate) is a sheet-shaped fiber aggregate (i.e., an aggregate of fibers in the form of a sheet). The fibers constituting such a nonwoven fabric can be chemical fibers (including synthetic fibers, semisynthetic fibers and reconstituted fibers) such as polyester fibers, rayon, vinylon, acetate fibers, polyvinyl alcohol (PVA) fibers, polyamide fibers (nylon), polyolefin fibers (polypropylene fibers), or polyurethane fibers; or natural fibers such as wood pulp, cotton or hemp (e.g., manila hemp). The nonwoven fabric can comprise any such fibers used alone or it can comprise two or more types thereof. From the standpoint of strength and durability of the abnormal noise preventing sheet, a nonwoven fabric that consists primarily of chemical fibers is preferably used. For example, a nonwoven fabric consisting of one or two or more types of nylon, polypropylene fibers, and polyester fibers can preferably be used. A nonwoven fabric wherein the constituent fibers are nylon alone or polypropylene alone can be noted as particularly preferred.

Preferably the nonwoven fabric for the substrate has a thickness of about 0.1 mm or more (more preferably about 0.2 mm or more). If the fabric is too thin, the performance of the abnormal noise preventing sheet is likely to decline, and the strength thereof may also tend to decline. The upper limit of the thickness of the nonwoven fabric is not particularly limited herein, but if the abnormal noise preventing sheet is too thick, it may become less practical because the possible installation sites for the sheet will be restricted. Therefore, preferably the normal thickness of the nonwoven fabric will be about 3 mm or less, and more preferably about 2 mm or less (e.g., about 1 mm or less). In one preferred mode of the abnormal noise preventing sheet disclosed herein, the thickness of the nonwoven fabric for the substrate is about 0.2 mm to 0.6 mm.

The nonwoven fabric for the substrate can have a metsuke (weight per unit surface area) of about 25 g/m² to 250 g/m². Normally, a nonwoven fabric with a metsuke of about 30 g/m² to 200 g/m² is preferred (more preferably about 40 g/m² to 100 g/m², e.g., about 40 g/m² to 80 g/m²). If the metsuke of the fabric is too small, the performance of the abnormal noise preventing sheet is likely to decline, and the strength thereof may also tend to decline. If the metsuke of the nonwoven fabric is too high, the possible installation sites for the abnormal noise preventing sheet may be restricted.

The bulk density of the nonwoven fabric for the substrate (calculated by dividing the metsuke of the nonwoven fabric by the thickness) can be, for example, about 0.05 g/m² to 0.5 g/cm³. Normally, the nonwoven fabric preferably has a bulk density of about 0.1 g/m² to 0.3 g/cm³ (e.g., about 0.1 g/m² to 0.2 g/cm³). If the bulk density of the nonwoven fabric is too small, the performance of the abnormal noise preventing sheet is likely to decline. If the bulk density of the nonwoven fabric is too high, the possible installation sites for the abnormal noise preventing sheet may be restricted.

The process for producing the nonwoven fabric for the substrate is not particularly limited herein, and the nonwoven fabric can be manufactured using various prior art, publicly known methods. For example the process for building up the fibers can be any general method such as a spunbond process, dry process or wet process, and the spunbond process can be noted as one preferred example. Moreover, various general methods can be used for interfiber bonding, including the thermal bonding (thermo-compression) process, chemical bonding process or needle punch process, and each method can be used alone or suitably combined and used together.

The surface shape of the nonwoven fabric for the substrate can be flat, or it can have either a regular or random concavoconvex pattern. This concavoconvex pattern can be formed, for example, by compressing the nonwoven fabric between embossing rolls with a concavoconvex surface shape that is complementary to that of the concavoconvex pattern to be placed on the nonwoven fabric. An abnormal noise preventing sheet using a nonwoven fabric imparted with such a concavoconvex pattern (and especially an abnormal noise preventing sheet wherein the nonwoven fabric on the back side of the substrate is exposed) can provide even better abnormal noise prevention properties.

A nonwoven fabric for the substrate that is manufactured without the substantial use of an adhesive (binder) is preferred from the standpoint of achieving an abnormal noise preventing sheet with greatly reduced toluene emission and TVOC levels. For example, preferably the nonwoven fabric has a toluene emission of 0.13 µg or less (typically 0 µg to 0.1 µg) per 10 cm² of nonwoven fabric when measured by the same method used for the PSA layer. Moreover, preferably the nonwoven fabric has a TVOC level of 1.25 µg or less (typically 0 µg to 1 µg) per 10 cm² of nonwoven fabric when measured by the same method used for the PSA layer.

Preferably the nonwoven fabric for the substrate has a tensile strength in the machine direction (MD, lengthwise direction) of about 60 N/50 mm or more, and even more preferably about 100 N/50 mm or more. Moreover, preferably the tensile strength in the transverse direction (TD, crosswise direction) is about 30 N/50 mm or more, and even more preferably about 50 N/50 mm or more. An abnormal noise preventing sheet using this kind of strong nonwoven fabric provides excellent handling properties and durability.

Preferably, the nonwoven fabric for the substrate in the technology disclosed herein is imparted with fire resistance. In particular, the use of this kind of fire-resistant nonwoven fabric is preferred in an abnormal noise preventing sheet used to prevent abnormal noise in vehicles. The means for imparting fire resistance to the nonwoven fabric is not particularly limited herein, and a prior art, publicly known fire-resistant nonwoven fabric can be suitably selected. For example, preferably a nonwoven fabric comprising a synthetic fabric incorporating a fire retardant as a constituent fiber (for example, a nonwoven fabric substantially comprising those synthetic fibers), or a nonwoven fabric in which a surface treatment with a fire retardant has been performed can be used. The fire retardant can be a general phosphorous-based, chorine-based, bromine-based or other type of fire retardant, and one type alone can be used or two or more types can be combined and used together. In one preferred mode of the abnormal noise preventing sheet disclosed herein, the level of fire resistance of the nonwoven fabric constituting the substrate satisfies the requirements of FMV SS No. 302.

Examples of commercially available nonwoven fabric products that can preferably be used for the nonwoven fabric for the substrate include the "Eltas" series from Asahi Kasei Fibers Corp., and the nonwoven fabrics from Japan Vilene Co., Ltd. (particularly grades having polypropylene or nylon as the principal constituent fiber).

In the abnormal noise preventing sheet disclosed herein, a resin coating is provided on the surface of the first side (PSA layer side) of the substrate constituting the sheet. The resin coating is formed on the surface of the side of the nonwoven fabric for the substrate whereon the PSA layer is to be applied. The effect obtained by using a substrate with such a coating will be explained using FIG. 3. FIG. 3 illustrates one mode of use of the abnormal noise preventing sheet 10 with the configuration shown in FIG. 1, and is an example wherein the sheet 10 is used for abnormal noise prevention in an automobile. The abnormal noise preventing sheet 10 is positioned by affixing it to a member (first member) 30 constituting the automobile. If the sheet 10 is absent, another member (second member) 32 constituting the automobile will interfere with the first member 30 by repeated motion (represented by the two-headed arrow in FIG. 3) relative to the first member 30 as the engine vibrates (typically, the first member 30 and the second member 32 repeatedly contact and separate, i.e., repeatedly collide), and as a result, this member generates an abnormal noise such as vibration noise. In this mode of use, the abnormal noise preventing sheet 10 is installed at a suitable site on the first member 30 (site that interacts with the second member 32), so direct collision between the second member 32 and the first member 30 is avoided, and the collision with the second member 32 is absorbed by the back side 12B of the abnormal noise preventing sheet 10. Thus, the generation of abnormal noise can be prevented. Moreover, if an abnormal noise is generated by the second member 32 being pressed against the first member 30 due to distortion of the automobile body, the compressive force of the second member 32 can be absorbed by the abnormal noise preventing sheet 10 by adhering the abnormal noise preventing sheet 10 to a suitable site on the first member 30.

In this case, when the collision or pressing of the second member 32 is absorbed by the back side 12B of the abnormal noise preventing sheet 10, the sheet 10 is pressed (compressed) between the first member 30 and the second member 32. If this pressing is repeated, in an abnormal noise preventing sheet configured so that the PSA layer is directly positioned on the surface of the nonwoven fabric, the PSA constituting the PSA layer will penetrate into the interior of the nonwoven fabric as a consequence of this pressing according to the conditions of use (strength of pressing, frequency and duration of use), and a condition can develop in which the PSA bleeds out of the back side of the substrate. If the PSA that bleeds out of the back side of the substrate comes into contact with the second member 32, it can cause the generation of a new abnormal noise (sticking sound or rubbing sound). Moreover, if the PSA bleeds out of the back side of the substrate, there is concern that the texture of the back side will be lost (e.g., unpleasant sensation due to stickiness) and the quality of the appearance will decline (adhesion of dust). This kind of PSA bleeding is particularly likely to occur in a mode using a relatively soft PSA emphasizing adhesiveness to a rough surface.

As illustrated in FIGS. 1 and 2, since a resin coating 124 is provided on the surface 12A of the side of the substrate 12 that has the PSA layer, bleeding of the PSA 143, 144, 243 into the nonwoven fabric 122 can be prevented by this resin coating 124. Therefore, an abnormal noise preventing sheet with this kind of configuration can greatly prevent the phenomenon of PSA bleeding onto the back side. In a configuration without the resin coating, bleeding of the PSA is likely to occur when at least one of the following conditions is met: the bulk density of the nonwoven fabric constituting the substrate is relatively low (for example, about 0.5 g/cm³ or less, typically about 0.1 g/cm³ to 0.5 g/cm³); the metsuke of the nonwoven fabric is relatively low (for example, about 100 g/m² or less, typically about 40 g/cm³ to 100 g/m², and especially 40 g/cm³ to 80 g/m²); or the nonwoven fabric is relatively thin (for example, a thickness of about 0.5 mm or less, typically 0.2 mm to 0.6 mm). Therefore, providing the resin coating to an abnormal noise preventing sheet using this kind of nonwoven fabric is particularly significant.

The resin material constituting the resin coating is not particularly limited herein provided it is a resin material capable of forming a film (typically, a resin material having a thermoplastic resin as the primary component), and a resin material having a polyolefin resin (polyethylene resin or polypropylene resin), an ethylene-vinyl acetate copolymer resin (EVA), a polyvinyl chloride resin, or a polyester resin, as the primary component can be used. Preferably a polyethylene resin is used as the resin material because it easily forms a coating and has a small environmental burden. Any of the so-called low density polyethylene (LDPE), linear low density polyethylene (LLDPE), or high density polyethylene (HDPE) resins, can be used as this kind of polyethylene resin. Preferably an LDPE is used from the standpoint of the ease of forming a coating. Preferably a prior art, publicly known extrusion molding method can be used as the method of forming this kind of resin material into a film. For example, the resin material can be formed into a film by using an extrusion molding apparatus provided with a T-die, and extruding molten resin material from the T-die at a die temperature of 300°C or higher.

As the method for providing the resin coating to one side of the nonwoven fabric for the backing, the following can be suitably used: a method wherein the resin material that has been formed into a film (resin film) is bonded to the surface of the nonwoven fabric by heat-sealing the resin film thereto (extrusion lamination process); a method wherein the resin film is bonded to the surface of the nonwoven fabric by an adhesive; or a method wherein the molten resin material is directly applied to the surface of the nonwoven fabric (melt lamination process). A resin coating that is provided without the use of adhesive is preferred from the standpoint of achieving an abnormal noise preventing sheet with greatly reduced toluene emission and TVOC levels. For example, preferably the extrusion lamination process is used. To increase the bonding strength between the resin film and the nonwoven fabric, the two can be bonded after performing a surface treatment such as a corona treatment or plasma treatment, on one or both of the surfaces of the film and the nonwoven fabric to be bonded. Such a surface treatment can be used on the surface of PSA layer-side of the resin film, and the bonding strength between the PSA layer and the substrate (anchoring of the PSA layer) can be enhanced thereby.

The thickness of the resin coating can be set, for example, at about 0.01 mm to 0.1 mm. Preferably, the thickness of the resin coating is normally about 0.03 mm to 0.05 mm. If the coating film is too thin, the resin film can break under the conditions of use, and then the PSA can penetrate the nonwoven fabric and bleed onto the back side thereof. On the other hand, if the resin coating is too thick, the abnormal noise preventing sheet will become thick, and the possible installation sites of the sheet will be restricted. In addition, because the pliability of the abnormal noise preventing sheet will be reduced, the adhesiveness thereof to a curved surface is likely to decline, and the abnormal noise preventing sheet could peel off as a result.

In one preferred mode of the abnormal noise preventing sheet disclosed herein, the ratio (T1/T2) of the thickness of the nonwoven fabric constituting the substrate T1 to the thickness of the PSA layer T2 ranges from 2 to 5. Such an abnormal noise preventing sheet providing a thick PSA layer relative to the thickness of the nonwoven fabric is preferred because excellent adhesiveness to rough surfaces can be obtained. It should be noted that in an abnormal noise preventing sheet wherein T1/T2 lies within this range, the PSA is likely to bleed onto the back of substrate (nonwoven fabric) in a configuration wherein the PSA layer is directly placed on the surface of the nonwoven fabric. Therefore, in such an abnormal noise preventing sheet, using a configuration wherein a resin coating film is provided on the surface of the first side of the substrate is particularly significant.

The PSA layer featured in the abnormal noise preventing sheet disclosed herein can assume the form of a double-sided PSA Sheet having PSA on each side of a support See FIG. 1). An abnormal noise preventing sheet having a PSA layer in such a mode can restrict movement of the PSA by using the above support even if the PSA layer is relatively thick, and therefore the phenomenon of PSA bleeding from the back side of the substrate is unlikely to occur. Making the PSA layer thick in this manner is also advantageous in terms of increasing the adhesiveness thereof to a rough surface. Moreover, preferably the PSA layer can be formed on the substrate by affixing a double-sided PSA sheet fabricated independently from the substrate to the surface of the first side of the substrate, which improves the productivity of the abnormal noise preventing sheet.

Any of the following can be used as the support: nonwoven fabric constituting the same fibers as the nonwoven fabric substrate (nonwoven fabric for the PSA layer), woven fabric, or a plastic film (for example, a polyester-based resin film). Preferably the nonwoven fabric consists of natural fiber. For example, the kind of nonwoven fabric that is produced using a common paper machine (so-called "paper") can preferably be used. Preferably the nonwoven fabric for the PSA layer is, for example, about 20 µm to 100 µm thick. Preferably a nonwoven fabric with a grammage in the range of about 10 g/m² to 25 g/m² can be used. Preferably the bulk density of the nonwoven fabric lies within the range of about 0.25 g/cm³ to 0.5 g/cm³.

A double-sided PSA sheet featuring such a support can be fabricated by using, for example, a process selected from (1) and (2) below on the first side and the second side, respectively, of the support: (1) a method wherein a PSA film is formed on a sheet material having a releasable surface (release liner) by applying the PSA composition to the release liner and drying the same, and then affixing the PSA to the support by transferring (overlaying) the same thereto (hereinafter, also called the "transfer process") and (2) a method wherein the PSA composition is applied directly to the support and dried (hereinafter, also called the "direct application process" or "direct process"). For example, a double-sided PSA sheet can be fabricated by using the transfer process on each side of the support, or a double-sided PSA sheet can be fabricated by using the transfer process on the first side of the support and the direct application process on the second side. A PSA layer can be provided to the first side of the substrate by affixing one side of the adhesive surface of such a double-sided PSA sheet to the substrate.

The PSA composition can be applied using a conventional coater, e.g., a gravure roll coater, reverse roll coater, kiss roll coater, dip roll coater, bar coater, knife coater or spray coater. From the standpoint of increasing efficiency in removing volatiles such as residual monomer and promoting the crosslinking reaction, the PSA composition is preferably dried by heating. The drying temperature is not particularly limited herein and, for example, a temperature of about 40°C to 140°C (preferably 60°C to 120°C) can be used. A drying time of about 1 min to 5 min, for example, can be used. The crosslinking reaction can be further advanced by aging (curing) the dried PSA layer under suitable conditions (e.g., an environment of 40°C or higher (typically 40°C to 70°C).

The thickness of the PSA film provided on the double-sided PSA sheet is not particularly limited herein, and can be, for example, about 20 µm to 150 µm (preferably about 40 µm to 100 µm) per one side of the support. Moreover, the thickness of the entire double-sided PSA sheet comprising both the PSA and the support can be, for example, about 50 µm to 400 µm (typically, 100 µm to 200 µm). If the sheet is too thin, the adhesive performance (adhesiveness to rough surfaces) will tend to decline. Meanwhile, if the double-sided PSA sheet is too thick, the abnormal noise preventing sheet will become thicker, and thereby restrict the possible installation sites thereof.

As shown in FIG. 2, for example, the abnormal noise preventing sheet disclosed herein can have a configuration wherein the mode of the PSA layer does not include a support. As a method for providing a PSA layer on the substrate in an abnormal noise preventing sheet of such a configuration, a process can preferably be used wherein, for example, a film-like PSA layer is formed on a release liner by applying the PSA composition to the release liner and drying the same, and then affixing the PSA to the surface of the first side of the substrate to transfer the same thereto.

Preferably the total thickness of the abnormal noise preventing sheet disclosed herein is about 150 µm to 2 mm (more preferably, about 300 µm to 1 mm). If the sheet is too thin, either one or both of adhesive performance and abnormal noise prevention performance will tend to decline. Conversely, if the abnormal noise preventing sheet is too thick, the installation sites of the sheet can become restricted.

The abnormal noise preventing sheet disclosed herein can have an adhesive strength (peel adhesion at 180°) of about 4 N/20 mm or more in relation to the nonwoven fabric when measured by the method disclosed in the following examples. In a more preferred mode, the adhesive strength is about 5 N/20 mm or more, and more preferably about 5.5 N/20 mm or more. The abnormal noise preventing sheet disclosed herein preferably has an abnormal noise level of 3 or less in a stick-slip test measured by the method disclosed in the following examples using a Ziegler Stick-Slip Test System under all measurement combinations of 5 N, 10 N, and 40 N loads and 1 mm/sec, 4 mm/sec, and 10 mm/sec sliding speeds against a PP (polypropylene) plate opposite material. Moreover, in the PSA bleeding test performed by the method disclosed in the following examples, the abnormal noise preventing sheet preferably exhibits no bleeding onto the back side.

When the abnormal noise preventing sheet disclosed herein is heated at 80°C for 30 min, the toluene emission level can be about 0.25 µg or less per 1 cm² of sheet. In this case, the toluene emission per surface area of the abnormal noise preventing sheet [µg/cm²] is determined by using a sample of abnormal noise preventing sheet cut to a predetermined size (for example, an area of 5 cm²), and the amount of toluene generated from the sample is measured in the same manner as in the method for measuring toluene emission per 1 g of PSA layer described above, and that measurement is then mathematically converted into the value per surface area of the abnormal noise preventing sheet. In one preferred mode, the toluene emission per 1 cm² of surface area of the PSA layer constituting the abnormal noise preventing sheet is about 0.25 µg or less.

The TVOC level when the abnormal noise preventing sheet disclosed herein is heated at 80°C for 30 min can be about 1.9 µg or less per 1 cm² of sheet. In this case, the amount of TVOC per surface area of the abnormal noise preventing sheet [µg/cm²] is determined by using a sample of abnormal noise preventing sheet cut to a predetermined size (for example, an area of 5 cm²), and the amount of TVOC generated from the sample is measured in the same manner as in the method for measuring TVOC per 1 g of PSA layer described above, and that measurement is then mathematically converted into the value per surface area of the abnormal noise preventing sheet. In one preferred mode, the amount of TVOC per 1 cm² of surface area of the PSA layer constituting the abnormal noise preventing sheet is about 1.9 µg or less.

Several examples relating to the present invention are described below. It should be noted that in the following descriptions the terms "part" and "%" refer to mass unless otherwise stated.

### Example 1

0.1 parts of 2,2'-azobis[N-2-carboxyethyl)-2-methyl propionamidine] hydrate (polymerization initiator) (trade name "VA-057" available from Wako Pure Chemical Industries, Ltd.) and 35 parts of ion exchange water were loaded into a reaction vessel equipped with a cooling tube, nitrogen infusion tube, thermometer, and stirrer, and the mixture was stirred for 1 hour at 60°C with the infusion of nitrogen gas. 70 parts of butyl acrylate, 30 parts of 2-ethylhexyl acrylate, 3 parts of acrylic acid, 0.03 parts of 3-methacryloxypropyl trimethoxysilane (trade name "KBM-503," Shin-Etsu Chemical Co., Ltd.), 0.05 parts of dodecane thiol (chain transfer agent), and 2 parts of sodium polyoxyethylene alkyl ether sulfate (trade name "LATEMUL E-118B", Kao Corporation) were added to 40 parts ion exchange water and emulsified (i.e., the monomer starting material emulsion), and while maintaining the polymerization temperature (in this case, 60°C), this emulsion was gradually dripped into the reaction mixture over 4 hours to carry out the polymerization reaction. After the addition of the monomer starting material emulsion had been completed, the mixture was aged by maintaining the same temperature (in this case 60°C) for 2 hours. After aging, 0.1 parts ascorbic acid and 0.1 parts of 35% hydrogen peroxide were added, and the system was cooled to ambient temperature. Thus, a reaction mixture containing an acrylic polymer was obtained.

The pH of the reaction mixture (acrylic polymer emulsion) was adjusted to 7 by adding 10% ammonia water. 30 parts (on a solid content basis) of tackifier emulsion per 100 parts of acrylic polymer contained in the emulsion were added to the acrylic polymer emulsion to prepare an aqueous emulsion of acrylic PSA composition (PSA composition P1). For the tackifier resin emulsion, a trade name "Tamanol E-200-NT" from Arakawa Chemical Industries, Ltd. (aqueous emulsion of polymeric rosin-based resin (softening point 150°C)) was used. It should be noted that the "Tamanol E-200-NT" is a tackifier resin emulsion manufactured using an aliphatic hydrocarbon organic solvent (i.e., a non-aromatic hydrocarbon organic solvent).

The above PSA composition was applied onto a release liner obtained by treating pure paper with a silicone-based release agent. A PSA layer of 60 µm thick was formed on the release liner by drying the same at 100°C for 2 min. This PSA layer was affixed to both sides of a nonwoven fabric support (trade name "SP-14K coated paper" from Daifuku Paper Mfg. Co., Ltd.) to fabricate a double-sided PSA sheet.

LDPE from Tosoh Corp. (trade name "Petrothene 203") was extruded from a T-die in the shape of a film 0.035 mm thick and 980 mm wide at a die temperature of 310°C at the edge and 350°C in the center. The above film was heat bonded to one side of a piece of flame-resistant nonwoven fabric (trade name "Eltas N03050" from Asahi Kasei Fibers Corp., 0.3 mm thick, nylon fiber material, metsuke 50 g/m², bulk density 0.17 g/cm³) to integrate the film and nonwoven fabric (extrusion lamination). Thus, a substrate was fabricated wherein one side of the nonwoven fabric was laminated with LDPE. It should be noted that the nonwoven fabric used as a constituent element of the substrate in this example was manufactured using a spunbond process, for example, and no adhesive was used therein.

A PSA layer was formed on the first side of the substrate by affixing one side of the PSA surface of the double-sided PSA sheet to the LDPE film side of the substrate. Thus, the abnormal noise preventing sheet of Example 1 was fabricated.

### Example 2

In this example a piece of flame-resistant nonwoven fabric (trade name "Eltas N03100" from Asahi Kasei Fibers Corp., 0.5 mm thick, nylon fiber material, metsuke 100 g/m², bulk density 0.20 g/cm³) was used as the nonwoven fabric. In the same manner as Example 1 in all other aspects, a substrate was fabricated wherein one side of the nonwoven fabric was laminated with LDPE. In the same manner as Example 1 the double-sided PSA sheet was affixed to this substrate to fabricate the abnormal noise preventing sheet of Example 2.

### Example 3

In this example the thickness of the extruded LDPE film was changed from the 0.035 mm of Example 1 to 0.05 mm. In the same manner as Example 1 in all other aspects, a substrate was fabricated wherein one side of the nonwoven fabric was laminated with LDPE. In the same manner as Example 1, the double-sided PSA sheet was affixed to this substrate to fabricate the abnormal noise preventing sheet of Example 3.

### Example 4

In this example the thickness of the extruded LDPE film was changed from the 0.035 mm of Example 1 to 0.025 mm. In the same manner as Example 1 in all other aspects, a substrate was fabricated wherein one side of the nonwoven fabric was laminated with LDPE. In the same manner as Example 1, the double-sided PSA sheet was affixed to this substrate to fabricate the abnormal noise preventing sheet of Example 4.

### Example 5 (Reference)

In this example the same flame-resistant nonwoven fabric used in Example 1 was used without further processing (i.e., no synthetic resin coating of LDPE film was provided thereto). In other words, one side of the PSA surface of a double-sided PSA sheet fabricated in the same manner as Example 1 was affixed directly to one side of the nonwoven fabric. Thus, the abnormal noise preventing sheet of Example 5 was fabricated. This abnormal noise preventing sheet had a configuration wherein the PSA layer was directly formed on one side of the nonwoven fabric.

### Example 6 (Reference)

In this example an acrylic PSA composition with a formulation excluding the tackifier resin emulsion from the composition (PSA composition P2) was used in place of the PSA resin composition used in Example 1. Except for the use of this PSA composition, a double-sided PSA sheet was fabricated in the same manner as in Example 1. The abnormal noise preventing sheet of Example 6 was fabricated by affixing one side of the PSA surface of the double-sided PSA sheet to the LPDE surface of the substrate in the same manner as in Example 1.

### Performance Evaluations

### Adhesive Strength vs. Nonwoven Fabric

Flame-resistant nonwoven fabric (trade name "Eltas N03050" from Asahi Kasei Fibers Corp.") was affixed to the surface of a stainless steel plate to fabricate an adherend for the measurement of adhesive strength to nonwoven fabric. This was carried out using double-sided adhesive tape from Nitto Denko Corp. (grade name "No. 500"), and adhering the nonwoven fabric to the surface of the stainless steel plate with a hand roller.

The release liner covering one adhesive surface of the double-sided PSA sheet was peeled off, and the surface was lined by affixing a 25 µm thick polyethylene phthalate (PET) film. The lined PSA sheet was cut to a piece 20 mm wide and 100 mm long to prepare a test sample. The release liner was peeled of the other PSA surface of the sample and applied to the nonwoven fabric surface of the adherend by a single back-and-forth pass with a 2 kg roller. After the test sample was let stand for 30 min at 23°C, the 180° peel adhesion to the nonwoven fabric was tested using a tensile test machine in accordance with JIS Z0237 at a pull speed of 300 mm/min in a measurement environment with a temperature of 23°C and 50% relative humidity.

### Stick-slip Test (vs. PP)

Using a Ziegler Stick-Slip Test System, an abnormal noise level measurement was performed under the following conditions.
Opposite material: Polypropylene plate
Loads: 5 N, 10 N, 40 N
Sliding speeds: 1 mm/sec, 4 mm/sec, 10 mm/sec

Using double-sided adhesive tape from Nitto Denko Corp. (grade name "No. 5000NS"), a 2.0 mm thick polypropylene plate (PP plate from Prime Polymer Co., Ltd., grade name "J830HV") was affixed to a 1.0 mm thick stainless steel plate. The stainless steel plate with the attached PP plate was immobilized in the jig of the test system so that the PP plate would be the surface to be measured. Samples were prepared by cutting the abnormal noise preventing sheets from the examples into 50 mm wide × 40 mm long strips, and the width center of the sample was aligned with one ridge of the triangular prism-shaped moving part (the ridge rubbing against the opposite material) to affix the sample to the moving part. Then, while varying the usage site of the opposite material, the moving part was slid 3 times each using each combination of load and speed, and the abnormal noise level was expressed numerically by an acceleration sensor provided on the moving part. An abnormal noise level of 3 or less according to VDA standards (the German quality management system for the automotive industry) passed, but a level of 4 or more failed.

Table 1 shows a summary configuration of the abnormal noise preventing sheet from each example, and the results of the measured toluene emission and TVOC levels, adhesive strength to nonwoven fabric and the slip-stick test against polypropylene. After the stick-slip test was performed under each measurement condition (combination of load and sliding speed), the surface of the sample was pressed lightly with the fingers to perform a sensory evaluation for PSA bleeding. If stickiness was not detected under any of the measurement conditions, PSA bleeding was scored as "No", but if stickiness was detected under one or more measurement conditions, PSA bleeding was scored as "Yes". These results are included in the table.

[Table 1]

**Table 1**

| | | | Ex. 1 | Ex. 2 | Ex. 3 | Ex. 4 | Ex. 5 | Ex. 6 |
|---|---|---|---|---|---|---|---|---|
| Nonwoven fabric thickness [mm] | | | 0.3 | 0.5 | 0.3 | 0.3 | 0.3 | 0.3 |
| Resin coating thickness [mm] | | | 0.035 | 0.035 | 0.05 | 0.025 | - | 0.035 |
| Tackifier present | | | Yes | Yes | Yes | Yes | Yes | No |
| Toluene emission [µg/g] | | | 7.0 | 7.0 | 7.0 | 7.0 | 7.0 | 5.3 |
| TVOC [µg/g] | | | 98 | 98 | 98 | 98 | 98 | 73 |
| Adhesive strength to nonwoven fabric [N/20 mm] | | | 5.5 | 5.8 | 5.8 | 5.3 | 5.1 | 3.6 |
| Stick-slip test (vs. PP) | 5N | 1 mm/sec | 1 | 2 | 3 | 3 | 2 | 3 |
| | | 4 mm/sec | 1 | 1 | 1 | 1 | 1 | 1 |
| | | 10 mm/sec | 2 | 1 | 1 | 1 | 1 | 1 |
| | 10 | 1 mm/sec | 1 | 2 | 2 | 2 | 2 | 2 |
| | | 4 mm/sec | 1 | 1 | 1 | 1 | 2 | 10 |
| | | 10 mm/sec | 1 | 1 | 1 | 1 | 2 | - |
| | 40 N | 1 mm/sec | 2 | 2 | 2 | 2 | 2 | - |
| | | 4 mm/sec | 1 | 1 | 1 | 2 | 3 | - |
| | | 10 mm/sec | 2 | 2 | 2 | 2 | 3 | - |
| PSA bleeding | | | No | No | No | Yes | Yes | No |

As shown in this table, although toluene emission of 20 µg/g or less and TVOC of 150 µg/g can be achieved with the abnormal noise preventing sheet of Example 6, which provides a PSA layer formed from acrylic PSA composition P2 that does not contain a tackifier resin, the adhesive performance is insufficient, as can be seen from the fact that the adhesive strength to nonwoven fabric, which is one standard for rough surface adhesiveness, is low. Therefore, under the severe conditions of a load of 10 N and a sliding speed of 4 mm/sec or more in the stick-slip test, the abnormal noise preventing sheet peeled off the moving part, and a meaningful measurement result could not be obtained (represented in Table 1 by a minus sign (-)).

In contrast, the abnormal noise preventing sheets of Examples 1 to 5 realized an adhesive performance with an adhesive strength of 5 N/20 mm or more toward nonwoven fabric while satisfying the conditions of a toluene emission level of 20 µg/g or less and TVOC level of 150 µg/g. In particular, the abnormal noise preventing sheets of Examples 1 to 3 wherein the resin coating thickness is 0.035 mm or more were confirmed to exhibit excellent rough surface adhesiveness with an adhesive strength of 5.5 N/20 mm or more toward nonwoven fabric. It should also be noted that in the stick-slip test using polypropylene (PP) as the opposite material, the abnormal noise preventing sheets of Examples 1 to 5 exhibited good abnormal noise prevention performance with an abnormal noise level of 3 or less under all the conditions evaluated herein. The abnormal noise preventing sheets of Examples 1 to 4, which provided a resin coating to the surface of the PSA layer side of the substrate tended to have even better abnormal noise prevention performance (in particular, abnormal noise prevention performance under strong loading conditions) than the abnormal noise preventing sheet of Example 5, which did not have the resin coating. Moreover, the abnormal noise preventing sheets of Examples 1 to 3 wherein the thickness of the resin coating was 0.035 mm or greater were all confirmed to have excellent protection against PSA bleeding.

The following additional performance evaluations were carried out on the abnormal noise preventing sheets of Examples 1 to 6.

### Stick-slip Test (toward ABS and TPE)

The abnormal noise level was evaluated for the same combinations of load and sliding speed as above using a 2.0 mm thick ABS plate (Toray Industries, grade name "Toyolac 40Y") and a 2.0 mm thick thermoplastic elastomer plate (TPE plate from Mitsubishi Chemical Corp., grade name "Thermolan 3555B/N") in place of the PP plate. The presence or absence of PSA bleeding was also evaluated in the same manner for the samples after completion of the stick-slip test. The results are shown in Tables 2 and 3.

[Table 2]

**Table 2**

| | | | Ex. 1 | | Ex. 2 | | Ex. 3 | |
|---|---|---|---|---|---|---|---|---|
| | | | ABS | TPE | ABS | TPE | ABS | TPE |
| Stick-slip test | 5N | 1 mm/sec | 2 | 1 | 2 | 2 | 2 | 2 |
| | | 4 mm/sec | 1 | 1 | 1 | 1 | 1 | 1 |
| | | 10 mm/sec | 1 | 1 | 1 | 1 | 1 | 1 |
| | 10N | 1 mm/sec | 2 | 2 | 2 | 1 | 2 | 1 |
| | | 4 mm/sec | 2 | 1 | 1 | 1 | 1 | 1 |
| | | 10 mm/sec | 2 | 1 | 1 | 1 | 1 | 1 |
| | 40 N | 1 mm/sec | 2 | 2 | 2 | 2 | 2 | 2 |
| | | 4 mm/sec | 1 | 1 | 1 | 1 | 1 | 1 |
| | | 10 mm/sec | 2 | 3 | 2 | 2 | 2 | 2 |
| PSA bleeding | | | No | | No | | No | |

[Table 3]

**Table 3**

| | | | Ex. 4 | | Ex. 5 | | Ex. 6 | |
|---|---|---|---|---|---|---|---|---|
| | | | ABS | TPE | ABS | TPE | ABS | TPE |
| Stick-slip test | 5 N | 1 mm/sec | 2 | 3 | 2 | 2 | 2 | 2 |
| | | 4 mm/sec | 1 | 1 | 1 | 2 | 1 | 1 |
| | | 10 mm/sec | 1 | 1 | 4 | 2 | 1 | 1 |
| | 10N | 1 mm/sec | 2 | 2 | 2 | 2 | 2 | 1 |
| | | 4 mm/sec | 1 | 1 | 3 | 3 | 1 | 10 |
| | | 10 mm/sec | 1 | 1 | 4 | 2 | - | - |
| | 40 N | 1 mm/sec | 2 | 2 | 2 | 2 | - | - |
| | | 4 mm/sec | 1 | 1 | 1 | 2 | - | - |
| | | 10 mm/sec | 2 | 2 | 3 | 8 | - | - |
| PSA bleeding | | | Yes | | Yes | | No | |

As shown in these tables, in the stick-slip tests using both ABS and TPE as the opposite material, the abnormal noise preventing sheets of Examples 1 to 4, which provided a resin coating on the PSA layer side of the substrate, exhibited excellent abnormal noise prevention performance with an abnormal noise level of 3 or less under all conditions evaluated herein. Moreover, the abnormal noise preventing sheets of Examples 1 to 3 wherein the thickness of the resin coating was 0.035 mm or greater were all confirmed to have excellent protection against PSA bleeding.

### INDUSTRIAL APPLICABILITY

The abnormal noise preventing sheet disclosed herein has superior adhesive performance (e.g., rough surface adhesiveness), and the toluene emission is kept to an extremely low level, so it is preferably used to prevent the generation of abnormal noises in vehicles, household appliances, and office automation equipment. More specifically, it is most suitable as an abnormal noise preventing sheet that is used by affixing the PSA layer to a site facing the interior space of a vehicle or a space connecting thereto (for example, an abnormal noise preventing sheet that is used by attaching the same to an interior material).

### EXPLANATION OF REFERENCE NUMERALS

- 10, 20: Abnormal noise preventing sheet
- 12: Substrate
- 122: Nonwoven fabric (nonwoven fabric for substrate)
- 124: Resin coating
- 14, 24: PSA layer
- 14A: Surface (adhesive surface)
- 142: Support
- 143, 144, 243: PSA
- 16: Release liner

## Claims

1. An abnormal noise preventing sheet comprising a substrate comprising a nonwoven fabric and a pressure-sensitive adhesive layer provided to a first side of the substrate, wherein
the pressure-sensitive adhesive constituting the pressure-sensitive adhesive layer comprises an acrylic polymer as a base polymer and a tackifier resin; and
a toluene emission level when the pressure-sensitive adhesive layer is heated at 80°C for 30 min is 20 µg or less per gram of the pressure-sensitive adhesive layer; and
wherein a resin coating is provided on the surface of the first side of the substrate between the nonwoven fabric and the pressure-sensitive adhesive layer.

2. The abnormal noise preventing sheet according to claim 1, wherein a 180° peel strength with regard to the nonwoven fabric is 4 N/20 mm or more.

3. The abnormal noise preventing sheet according to claim 1 or 2, wherein the surface of the second side of the substrate is a surface exposing the nonwoven fabric, and no bleeding of the pressure-sensitive adhesive onto the surface of the second side is detected after a stick-slip test is performed by means in accordance with VDA230-206.

4. The abnormal noise preventing sheet according to any one of claims 1 to 3, wherein a bulk density of the nonwoven fabric constituting the substrate is 0.1 to 0.5 g/cm³.

5. The abnormal noise preventing sheet according to any one of claims 1 to 4, wherein the pressure-sensitive adhesive layer is configured as a double-sided pressure-sensitive adhesive sheet having pressure-sensitive adhesive on each side of a support.

6. The abnormal noise preventing sheet according to any one of claims 1 to 5, which is to be used by affixing the pressure-sensitive adhesive layer to a location facing an interior space of a vehicle or a space connecting thereto.

7. The abnormal noise preventing sheet according to any one of claims 1 to 6, wherein an abnormal noise level is 3 or less when measured by a Ziegler Stick-Slip Test System by using a polypropylene sheet as the opposite material under all measurement conditions below:
loads of 5 N, 10 N, and 40 N; and
sliding speeds of 1 mm/sec, 4 mm/sec, and 10 mm/sec.

8. The abnormal noise preventing sheet according to any one of claims 1 to 7, wherein the acrylic polymer is synthesized by emulsion polymerization.

9. The abnormal noise preventing sheet according to any one of claims 1 to 8, wherein the pressure-sensitive adhesive layer is formed from a pressure-sensitive adhesive composition prepared by mixing an aqueous emulsion of the acrylic polymer with an aqueous emulsion of the tackifier resin.

## Patentansprüche

1. Folie zum Verhindern von abnormalem Lärm, umfassend ein Substrat umfassend ein Faservlies und eine Haftklebstoffschicht, die auf einer ersten Seite des Substrats bereitgestellt ist, wobei
der Haftklebstoff, aus dem die Haftklebstoffschicht gebildet ist, ein Acrylpolymer als ein Basispolymer und ein Klebrigmacherharz umfasst; und
ein Toluolemissionswert 20 pg oder weniger pro Gramm der Haftklebstoffschicht beträgt, wenn die Haftklebstoffschicht 30 min auf 80 °C erhitzt wird;
wobei ein Harzüberzug auf der Oberfläche der ersten Seite des Substrats zwischen dem Faservlies und der Haftklebstoffschicht bereitgestellt ist.

2. Folie zum Verhindern von abnormalem Lärm nach Anspruch 1, wobei eine 180°-Schälfestigkeit im Hinblick auf das Faservlies 4 N/20 mm oder mehr beträgt.

3. Folie zum Verhindern von abnormalem Lärm nach Anspruch 1 oder 2, wobei die Oberfläche der zweiten Seite des Substrats eine Oberfläche ist, die das Faservlies freilegt, und kein Ausbluten des Haftklebstoffs auf die Oberfläche der zweiten Seite nachgewiesen wird, nachdem eine Stick-Slip-Prüfung durch Mittel gemäß VDA230-206 durchgeführt wurde.

4. Folie zum Verhüten von abnormalem Lärm nach einem der Ansprüche 1 bis 3, wobei eine Rohdichte des Faservlieses, aus dem das Substrat gebildet ist, 0,1 bis 0,5 g/cm³ beträgt.

5. Folie zum Verhindern von abnormalem Lärm nach einem der Ansprüche 1 bis 4, wobei die Haftklebstoffschicht als doppelseitige Haftklebefolie mit Haftklebstoff auf jeder Seite eines Trägers konfiguriert ist.

6. Folie zum Verhindern von abnormalem Lärm nach einem der Ansprüche 1 bis 5, welche durch Befestigen der Haftklebstoffschicht an einem Ort, welcher einem Innenraum eines Fahrzeugs oder einem damit verbundenen Raum zugewandt ist, verwendet werden soll.

7. Folie zum Verhindern von abnormalem Lärm nach einem der Ansprüche 1 bis 6, wobei ein abnormaler Lärmpegel, wenn er mit einem Ziegler-Stick-Slip-Prüfsystem unter Verwendung einer Polypropylenfolie als das Gegenmaterial gemessen wird, unter allen nachstehenden Meßbedingungen 3 oder weniger beträgt:
Lasten von 5 N, 10 N und 40 N; und
Gleitgeschwindigkeiten von 1 mm/s, 4 mm/s und 10 mm/s.

8. Folie zum Verhindern von abnormalem Lärm nach einem der Ansprüche 1 bis 7, wobei das Acrylpolymer durch Emulsionspolymerisation synthetisiert wird.

9. Folie zum Verhindern von abnormalem Lärm nach einem der Ansprüche 1 bis 8, wobei die Haftklebstoffschicht aus einer Haftklebstoffzusammensetzung gebildet ist, die durch Vermischen einer wässrigen Emulsion des Acrylpolymers mit einer wässrigen Emulsion des Klebrigmacherharzes hergestellt wird.

## Revendications

1. Une feuille arrêtant les bruits anormaux comprenant un substrat comprenant un tissu non tissé et une couche d'adhésif sensible à la pression disposée sur une première face du substrat, dans laquelle
l'adhésif sensible à la pression constituant la couche d'adhésif sensible à la pression comprend un polymère acrylique comme un polymère de base et une résine d'agent poisseux ; et
un niveau d'émission de toluène lorsque la couche d'adhésif sensible à la pression est chauffée à 80 °C pendant 30 minutes est de 20 µg ou moins par gramme de la couche d'adhésif sensible à la pression ; et
dans laquelle un revêtement de résine est disposé sur la surface de la première face du substrat entre le tissu non tissé et la couche d'adhésif sensible à la pression.

2. La feuille arrêtant les bruits anormaux selon la revendication 1, dans laquelle une résistance au pelage à 180° en ce qui concerne le tissu non tissé est de 4 N / 20 mm ou plus.

3. La feuille arrêtant les bruits anormaux selon la revendication 1 ou 2, dans laquelle la surface de la seconde face du substrat est une surface exposant le tissu non tissé, et aucune migration de l'adhésif sensible à la pression sur la surface de la seconde face n'est détectée après qu'un test de broutage est effectué par un moyen selon VDA230-206.

4. La feuille arrêtant les bruits anormaux selon l'une quelconque des revendications 1 à 3, dans laquelle une densité apparente du tissu non tissé constituant le substrat est de 0,1 à 0,5 g/cm³.

5. La feuille arrêtant les bruits anormaux selon l'une quelconque des revendications 1 à 4, dans laquelle la couche d'adhésif sensible à la pression est configurée comme une feuille d'adhésif sensible à la pression double face ayant un adhésif sensible à la pression de chaque côté d'un support.

6. La feuille arrêtant les bruits anormaux selon l'une quelconque des revendications 1 à 5, qui doit être utilisée en fixant la couche d'adhésif sensible à la pression à un emplacement faisant face à un espace intérieur d'un véhicule ou d'un espace de connexion à ce dernier.

7. La feuille arrêtant les bruits anormaux selon l'une quelconque des revendications 1 à 6, dans laquelle un niveau de bruit anormal est de 3 ou moins quand on le mesure par un Système de Test de Broutage de Ziegler en utilisant une feuille de polypropylène en tant que matière opposée sous toutes les conditions de mesure ci-dessous :
charges de 5 N, 10 N et 40 N ; et
vitesses de glissement de 1 mm/s, 4 mm/s et 10 mm/s.

8. La feuille arrêtant les bruits anormaux selon l'une quelconque des revendications 1 à 7, dans laquelle le polymère acrylique est synthétisé par polymérisation en émulsion.

9. La feuille arrêtant les bruits anormaux selon l'une quelconque des revendications 1 à 8, dans laquelle la couche d'adhésif sensible à la pression est formée à partir d'une composition d'adhésif sensible à la pression préparée en mélangeant une émulsion aqueuse du polymère acrylique avec une émulsion aqueuse de la résine d'agent poisseux.
